# EUROPÄISCHE PATENTSCHRIFT

(11) **EP 0 476 236 B1**
(45) Veröffentlichungstag und Bekanntmachung des Hinweises auf die Patenterteilung: **22.02.1995**
(21) Anmeldenummer: 91110005.5
(22) Anmeldetag: 19.06.1991
(51) Int. Cl.: B29C 45/17

(54) **Kupplungseinrichtung an der Spritzgiessform einer Kunststoff-Spritzgiessmaschine**
Clutch device on the mould of a plastics injection moulding machine
Dispositif d'accouplement sur le moule d'une machine à mouler par injection de matière plastique

(30) Priorität: 17.09.1990 DE 4029431
(43) Veröffentlichungstag der Anmeldung: 25.03.1992
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- DE-A- 3 222 828
- DE-A- 3 717 760

## Beschreibung

Die Erfindung betrifft eine Kupplungseinrichtung entsprechend dem Oberbegriff des Anspruches 1.

Unter 'bewegbarer Kupplung' im Sinne des Oberbegriffs wird diejenige Kupplung verstanden, welche vom Formträger beim Schließen bzw. Öffnen der Spritzgießform mitgeführt wird, also sich mit diesem bewegt.

Beim Betrieb von Kunststoff-Spritzgießmaschinen ist es erforderlich, die Spritzgießform vor Beginn des Spritzbetriebes auf die für die Herstellung der Spritzlinge optimale Betriebstemperatur zu bringen. Diese Maßnahme wird im folgenden als Temperierung der Spritzgießform bezeichnet. Zur Temperierung wird eine Temperierflüssigkeit durch entsprechende Temperierkanäle der Gießformhälften gepumpt. Zur Regelung der durch die optimale Betriebstemperatur bestimmten 'Soll'-Temperatur der Spritzgießform ist diese zudem mit elektrischer Energie z. B. für Thermofühler zu versorgen. Die Temperierung erfolgt vielfach an der bereits in Betriebsposition, also im Spannraum der Kunststoff-Spritzgießmaschine angeordneten Spritzgießform.

Während des Spritzbetriebes sind spezifische Funktionen der Spritzgießform erforderlich, wenn z.B. Spritzlinge komplizierter Gestalt oder Spritzlinge mit Innen- oder Außengewinden herzustellen sind. Dabei haben oftmals metallene Kerne mit oder ohne Gewinde an der Bildung des Formhohlraumes teil. Beim Entformen werden die Kerne mittels in der Spritzgießform integrierter motorischer Antriebe, zum Beispiel mittels hydraulischer Kolben-Zylinder-Einheiten oder mittels Elektromotoren, aus dem fertigen Spritzteil gezogen oder geschraubt. Darüber hinaus sind zum Teil auch Funktionen erforderlich, deren Vollzug den Einsatz von Druckluft voraussetzt. Dies gilt zum Beispiel beim Ausblasen der fertigen Spritzlinge aus der Gießform. Die beispielsweise genannten spezifischen Funktionen der Spritzgießform werden im folgenden als operative Funktionen der Spritzgießform bezeichnet, für die Drucköl bzw. Druckluft und zwecks Abgabe von elektrischen Signalen bei Regelung der Funktionen auch elektrische Energie erforderlich ist.

Mit einer bekannten Kupplungseinrichtung der eingangs genannten Gattung (DE 32 28 434 A1; Firmenschrift 'Netstal QNC-5000 d-8.85-KAG' der Netstal Maschinen AG, 8752 Näfels/Schweiz) werden sämtliche Versorgungsleitungen an die im Spannraum der Spritzgießmaschine, also in Arbeitsposition befindliche Spritzgießform an- bzw. abgekuppelt. Hierfür sind identisch aufgebaute Kupplungsträger vorgesehen, auf denen sowohl die Kupplungen für die Temperierung als auch die Kupplungen für die operativen Funktionen zusammengefaßt sind. Dabei ist ein Kupplungsträger an der Anlageplatte der stationären Gießformhälfte und ein weiterer identischer Kupplungsträger an der Anlageplatte für die bewegbare Gießformhälfte befestigt. Diese gießformseitigen Kupplungsträger korrespondieren mit den entsprechenden maschinenseitigen Kupplungsträgern, die an den Formträgern befestigt sind. Bei einem solchen Aufbau der Kupplungseinrichtung ergibt sich zwar ein fertigungsfreundlicher, weitgehend symmetrischer Aufbau der Kupplungen an der Spritzgießform; andererseits ist eine räumliche zeitliche Trennung des Anschlusses der Versorgungsleitungen für die Temperierung einerseits und der Versorgungsleitungen für die operativen Funktionen andererseits nicht möglich. Zudem hat der Kaufinteressent lediglich die Möglichkeit, die für die Temperierung und für alle operativen Funktionen ausgelegte Kupplungseinrichtung als Gesamtpaket zu erwerben, auch wenn ein Bedarf an bestimmten operativen Funktionen nicht besteht. Im übrigen erfordert die bekannte Einrichtung einen hydraulischen Antriebszylinder für das Heranführen der einen Kupplungshälfte an die andere und einen weiteren Antriebszylinder für das Verriegeln der Kupplung.

Bei einer anderer, bekannter Kupplungseinrichtung (DE-35 09 518 C1) der gattungsgemäßen Art werden Versorgungsleitungen für die Temperierung auf einem Wechseltisch für den Wechsel der Spritzgießform, also außerhalb der Spritzgießmaschine befindliche Spritzgießform an- bzw. abgekuppelt. Beim Einfahren der temperierten, einzuwechselnden Spritzgießform bleibt die Kupplung ebenso aufrecht erhalten wie beim Überführen einer auzuwechselnden Spritzgießform vom Spannraum auf den Wechseltisch. Auf dem Wechseltisch sind oberhalb der Spritzgießform angeordnete Kupplungshälften mit hydraulischen Antriebszylindern für der Kupplungshub ausgerüstet. Beim Kupplungshub sind die Kupplungshälften an vertikalen Kupplungsbolzen geführt, die an einer Brücke des Wechseltisches abgestützt sind. Das Überführen der Spritzgießform mit angekuppelten Versorgungsleitungen vom Wechseltisch in den Spannraum der Spritzgießmaschine und umgekehrt setzt flexible, frei bewegliche Endabschnitte der maschinenseitigen Versorgungsleitungen voraus, die beim Transfer der Spritzgießform mitwandern. Bei der bekannten Kupplungseinrichtung werden weitere Kupplungen für operative Funktionen mit Hilfe der Einschubbewegung beim horizontalen Einfahren der Spritzgießform in den Spannraum gekuppelt. Dabei ist allerdings eine Konzentrizität der Kupplungsteile nicht gewährleistet. Auch reicht die Kraft der Einschubbewegung für eine sichere Kupplung vielfach nicht aus. Andererseits hat die bekannte Einrichtung den Vorteil, daß eine einzuwechselnde Spritzgießform auf einem Wechseltisch auf Betriebstemperatur temperiert werden kann, während der Spritzbetrieb mit der noch auszuwechselnden Spritzgießform weiterläuft. Da die Temperierung der Spritzgießform oftmals mehr als eine Stunde in Anspruch nehmen kann, ergibt sich dadurch eine wesentliche Verkürzung der Umrüstzeiten beim Gießformwechsel.

Der Erfindung liegt die Aufgabe zugrunde, eine Kupplungseinrichtung der eingangs genannten Gattung so auszubilden, daß die mit eigenem Antrieb versehenen Kupplungsmittel für die Temperierung und die mit eigenem Antrieb versehenen Kupplungsmittel für die bedarfsweisen operativen Funktionen der Spritzgießform voneinander getrennt angeordnet und dadurch nach Umfang und Einsatzort den jeweiligen Bedürfnissen besser angepaßt werden können. Dabei soll insbesondere die Möglichkeit eröffnet werden, die Temperierung außerhalb der Spritzgießmaschine vorzunehmen und dennoch Versorgungsleitungen für operative Funktionen nur bzw. erst dann an die in Arbeitsposition überführte Spritzgießform mit einem einzigen Antriebszylinder bei geringem Platzbedarf anzukuppeln, wenn hierfür ein Bedarf besteht.

Diese Aufgabe wird durch eine Kupplungsvorrichtung mit den Merkmalen des Patentanspruches 1 gelöst.

Bei einer solchen Ausbildung verläuft die Kupplungsrichtung der bewegbaren Kupplungshälfte senkrecht zur Trennebene der Spritzgießform, also horizontal. Der aus DE 35 09 518 C1 bekannte Vorteil einer wesentlichen Verkürzung der Umrüstzeit beim Gießformwechsel bleibt infolge einer Vortemperierung außerhalb des Spannraums voll erhalten, ohne daß bereits eine Ankupplung von Versorgungsleitungen für operative Funktionen außerhalb des Spannraumes erforderlich wäre. Die Ankupplung der Versorgungsleitungen für operative Funktionen erfolgt mittels des eigenen Antriebs im Spannraum der Spritzgießmaschine. Diese Ankupplung ist also räumlich und zeitlich von der Ankupplung der Versorgungsleitungen für die Temperierung getrennt. Eine solche Trennung von Kupplungsmitteln für die Temperierung von Kupplungsmitteln für die operativen Funktionen ist insofern vorteilhaft, als zwar Versorgungsleitungen für die Temperierung von den Versorgungsquellen im Bereich der Spritzgießmaschine bis zum Wechseltisch zu führen sind, bei Versorgungsleitungen für operative Funktionen jedoch eine Verlegung über eine relativ kurze Wegstrecke zum Spannraum hin genügt. Dementsprechend können die auf dem Wechseltisch zu kuppelnden Kupplungsmittel geringer dimensioniert sein. Die geringere Dimensionierung, verbunden mit einer Verringerung der Anzahl der anzukuppelnden Versorgungsleitungen erleichtert wiederum den Transfer der Spritzgießform vom Wechseltisch zum Spannraum und umgekehrt. Auf Grund des geschilderten Konzeptes der Energieversorgung der Spritzgießform ist es bei Auslieferung der Kunststoff-Spritzgießmaschine möglich, diese je nach Bedarf mit mehr oder weniger Kupplungsmitteln auszurüsten. Dies bedeutet, daß sich der Kaufinteressent finanziell nur insoweit zu engagieren braucht, als dies seinen derzeitigen Spritzbedürfnissen, insbesondere seinen wirklichen Automatisierungsbedürfnissen entspricht. Stellen sich später weitere Bedürfnisse heraus, so kann er diesem Umstand durch entsprechende Nachrüstungen Rechnung tragen. Im übrigen beansprucht die Kupplungseinrichtung verhältnismäßig wenig Raum und kommt mit einem einzigen, einen Klemmweg und einen Kupplungsweg realisierenden Antrieb pro Kupplung aus.

Nachstehend wird die Erfindung anhand der Zeichnungen an einem Ausführungsbeispiel erläutert.

Es zeigen:
- Fig. 1, 2: die Kupplungseinrichtung an einer im Spannraum der Kunststoff-Spritzgießmaschine angeordneten Spritzgießform in Rückansicht und Draufsicht,
- Fig. 3, 4: Ausschnitte aus den Kupplungseinrichtungen gemäß Fign. 1 und 2 im Bereich der maschinenseitigen Gießformhälfte,
- Fig. 5: einen Schnitt nach Linie 5-5 von Fig. 4 bei gelöster Kupplung,
- Fig. 6: eine Darstellung gemäß Fig. 5,
- Fig. 7, 8: Schnitte nach den Linien 7-7 und 8-8 der Fig. 3 und
- Fig. 9: eine für das Ziehen von Kernen geeignete Spritzgießform mit ihren gießformseitigen Kupplungshälften in Draufsicht.

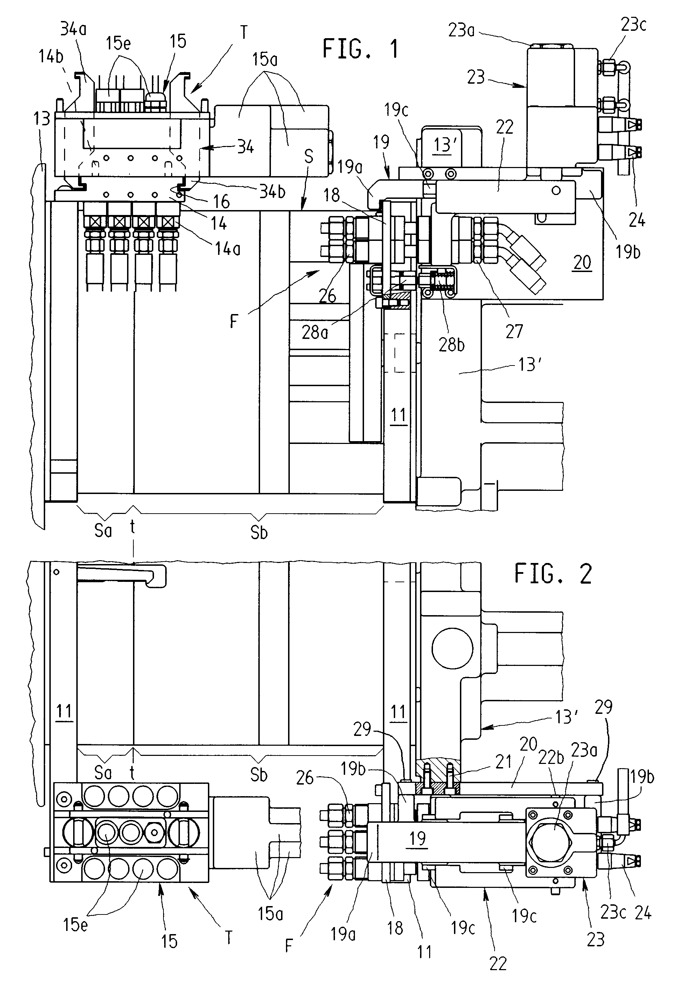

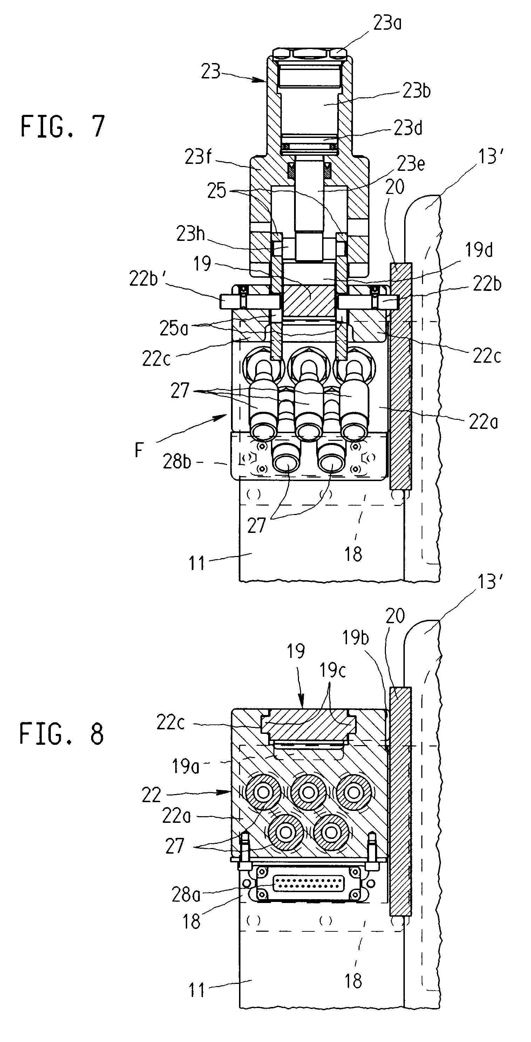

Die Gießformhälften Sa und Sb der Spritzgießform S sind mittels Anlageplatten 11 auf die Formträger 13, 13' (Fig. 1, 2, 9) einer Formschließeinheit der Kunststoff-Spritzgießmaschine aufspannbar. Die Kupplungseinrichtung gewährleistet den Anschluß von Versorgungsleitungen an die Spritzgießform S bei deren Temperierung und beim Vollzug der operativen Gießformfunktionen, wie beispielsweise beim hydraulischen Ziehen von Kernen, dem Druckluftausstoß von Spritzteilen und der Abgabe von Signalen. An der bewegbaren Gießformhälte Sb bildet eine Kupplungshälfte 26, 28a mit einer maschinenseitigen Kupplungshälfte 27, 28b die bewegbare Kupplung F für Versorgungsleitungen für operative Funktionen der Spritzgießform. Die Kupplungshälfte 27, 28b umfaßt einen oberen hydraulischen Kupplungsteil 27 und einen unteren elektrischen Kupplungsteil 28b. An der stationären Gießformhälfte Sa bildet eine Kupplungshälfte 14 mit einer maschinenseitigen Kupplungshälfte 15 eine stationäre Kupplung T für Versorgungsleitungen für die Temperierung der Spritzgießform. Für die bewegbare Kupplung und die stationäre Kupplung ist je ein hydraulischer Antriebszylinder vorgesehen, durch dessen Antriebshub die maschinenseitigen Kupplungshälften 27, 28b; 15 an die gießformseitigen Kupplungshälften 26, 28a; 14 an- bzw. abkuppelbar sind. Somit ist die im Bereich der stationären Gießformhälfte Sa angeordnete Kupplung T für die Temperierung der Spritzgießform und die im Bereich der bewegbaren Gießformhälte Sb angeordneten Kupplung F für den Vollzug von operativen Gießformfunktionen wesentlich bestimmt und geeignet. Die Figuren 1 bis 8 zeigen die zuvor auf einem Wechseltisch temperierte und danach in den Spannraum der Spritzgießmaschine einfahrene Spritzgießform, bei welcher die stationäre Kupplung T bereits bei Beginn der Temperierung auf dem Wechseltisch geschlossen und beim Einfahren in den Spannraum in geschlossenem Zustand verblieben ist.

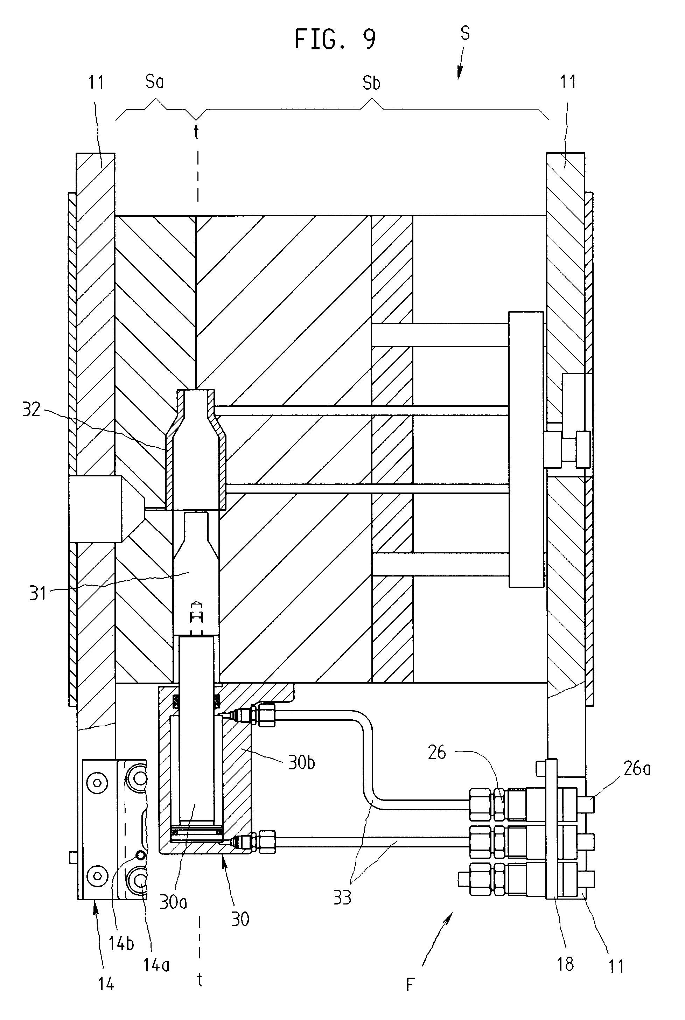

Die Kupplungsrichtung der im Bereich der stationären Gießformhälfte Sa befestigten stationären Kupplung T verläuft parallel zur Trennebene t-t der spritzgießform S. Die Kupplungsrichtung der im Bereich der bewegbaren Gießformhälte Sb angeordneten bewegbaren Kupplung F verläuft senkrecht zur Trennebene t-t. Wie insbesondere aus den Fign. 2, 9 ersichtlich, überragen die Anlageplatten 11 den Gießformkörper der Spritzgießform S nach rückwärts. Die gießformseitigen Kupplungshälften 14, 26 sind je im Bereich der den Gießformkörper überragenden Abschnitte der Anlageplatten 11 angeordnet. Die eine gießformseitige Kupplungshälfte 14 ist an der Oberkante der Anlageplatte 11 der stationären Gießformhälfte Sa befestigt, die andere gießformseitige Kupplungshälfte 26 ist an einer am bewegbaren Formträger 13' befestigten Anschlußplatte 18 befestigt. Diese Anschlußplatte 18 ist, wie insbesondere aus Fig. 2 erkennbar, in einer entsprechenden Aussparung der Anlageplatte 11 teilweise eingebettet. Die Richtung des Antriebshubes der hydraulischen Antriebszylinder 23, 15a der Kupplungsenrichtung verläuft je senkrecht zur Kupplungsrichtung der angetriebenen Kupplungshälften. Der Kraftvektor des Antriebshubes wird mittels Steuerplatten 25 um 90° umgelenkt, die mit schrägen Steuernuten 25a versehen sind. Die Steuerplatten 25 sind mit der Kolbenstange 23e des Antriebszylinders 23 mittels einer Lagerachse 23h verbunden. Zur Umlenkung des Kraftvektors des Antriebshubes greifen Steuerzapfen 22b eines die zugehörigen Kupplungshälften 27, 28b tragenden Schlittens 22 in die schrägen Steuernuten 25a der Steuerplatten 25 ein. Der Schlitten 22 mit seinen Kupplungshälften 27, 28b bildet mit dem den Antriebszylinder 23 tragenden Trägerelement 19 eine bauliche Einheit. Diese Einheit ist in einer mit dem bewegbaren Formträger 13 mittels Schraubenbolzen 21 fest verbundenen vertikalen Lagerplatte 20 begrenzt horizontal verschiebbar gelagert. Sie kann durch Anschrauben der Lagerplatte 20 an den Formträger 13' der in Arbeitsposition befindlichen Spritzgießform S zum Einsatz gebracht werden.

Die Fign. 1-5 zeigen die genannte Einheit vor ihrer Verspannung mit der Anschlußplatte 18 je bei noch nicht geschlossener Kupplung.

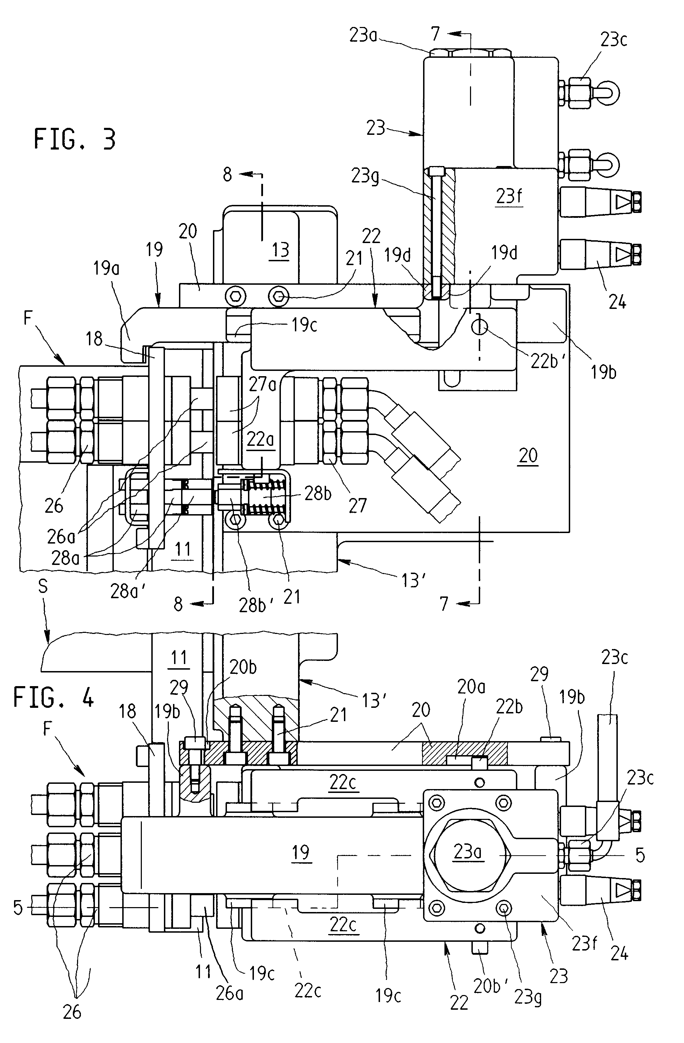

Wie insbesondere aus den Fign. 3-6 erkennbar, nimmt der Schlitten die Kupplungshälften 27, 28b mit einem plattenförmigen, der Gießform S zu gewandten vertikalen Trägerteil 22a auf. Von diesem Trägerteil 22a erstrecken sich zwei horizontale Schenkel 22c des Schlittens nach rückwärts. Der Schlitten 22 ist an Führungsrippen 19c des, den Antriebszylinder 23 abstützenden, Trägerelementes 19 horizontal geführt. Dabei ist der blockartig ausgebildete eigentliche. Zylinder 23f des Antriebszylinders 23 mittels Befestigungsschrauben 23g mit Lagersockeln 19d des Trägerelementes 19 verbunden (Fig. 3). Der Kolben 23d des Antriebszylinders 23 begrenzt Zylinderräume 23b, die über Hydraulikanschlüsse 23c mit Druckmedium beschickbar sind. Mit 23a ist ein den rückseitigen Zylinderraum abschließender Zylinderdeckel und mit 24 Endschalter zur Steuerung des Antriebszylinders 23 bezeichnet. Wie insbesondere aus Fig. 4 erkennbar, ist das langgestreckte Trägerelement 19 über seitliche Anformungen 19b mittels Schraubenbolzen an der Lagerplatte 20 abgestützt, welche Schraubenbolzen 29, wie weiter unten noch auszuführen ist, als Wegbegrenzungselemente dienen. Der Antriebshub des im Bereich des bewegbaren Formträgers 13 angeordneten Antriebszylinders 23 ist in einen Kupplungsweg für die Ankupplung der maschinenseitigen Kupplungshälfte 27, 28b und einen Spannweg für die Verspannung des den Antriebszylinder tragenden Trägerelementes 19 mit der bewegbaren Gießformhälfte Sb umsetzbar. Der Kupplungsweg ist mittels einer Wegbegrenzungsnut 20a in der Lagerplatte 20 begrenzt. In die Wegbegrenzungsnut 20a taucht der die Steuernut 25a der benachbarten Steuerplatte 25 durchgreifende Steuerzapfen 22b des Schlittens 22 ein. Der Spannweg ist mittels einer Wegbegrenzungsausnehmungen 20b (Fig. 4) in der Lagerplatte 20 begrenzt. In die Begrenzungsausnehmungen 20b tauchen Wegbegrenzungselemente 29 des Trägerelementes 19 mit einem dem Spannweg entsprechenden Spiel, ein wie insbesondere aus Fig. 4 ersichtlich.

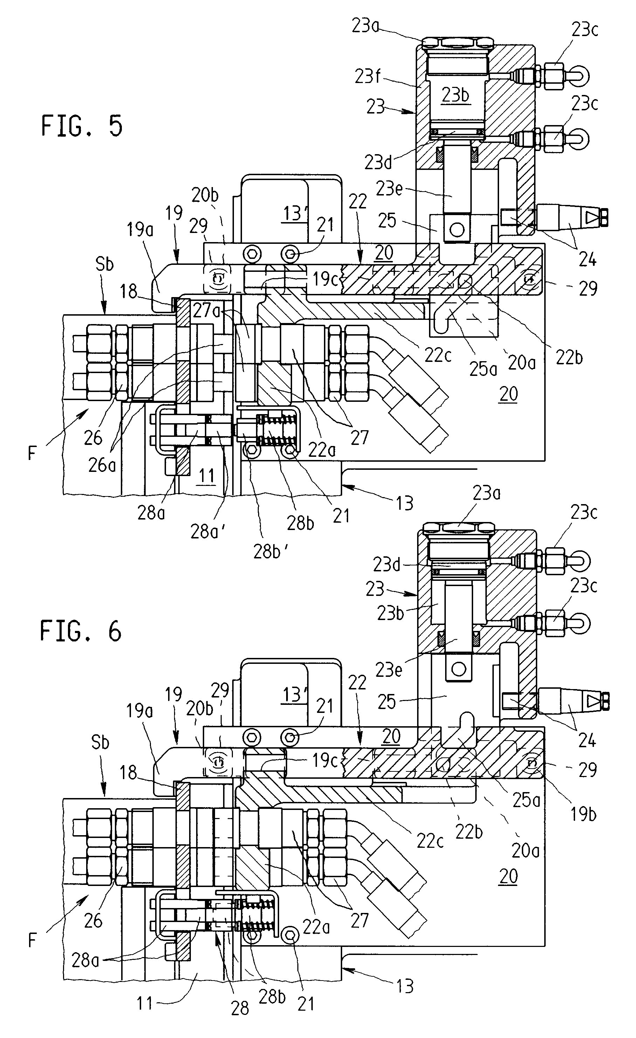

Im letzten Abschnitt des Kupplungsweges kuppeln die Kupplungsorgane 27a, 28b' (Fig. 3) der angetriebenen maschinenseitigen Kupplungshälften 27, 28b mit den Kupplungsorganen 26a, 28a' (Fig. 3,5) der gießformseitigen Kupplungshälften 26, 28a.

Beim Antriebshub des Antriebszylinders 23 gelangt der Schlitten 22 mit seiner Kupplungshälfte 27, 28b sowie das Trägerelement 19 mit seiner Hintergriffsnase 19a aus einer Stellung gemäß Fig. 5 in eine Position gemäß Fig. 6. Dabei bewegt sich das Trägerelement 19 nach Maßgabe des Spiels in der Wegbegrenzungsausnehmung 20b geringfügig nach rechts, wobei sich die Hintergriffsnase 19a an die Stirnseite der Anschlußplatte 18 anlegt. Andererseits bewegt sich der Schlitten 22 nach Maßgabe der Länge der Wegbegrenzungsnut 20a (Fig. 4) nach links bis der Steuerzapfen 22b an die linke Kante der Wegbegrenzungsnut 20a anschlägt. Der entgegengesetzte Antrieb von Trägerelement 19 und Schlitten 22 resultiert daraus, daß die Steuernut 25a im Gefolge einer Vertikalbewegung eine horizontale Antriebsbewegung des Schlittens nach links und eine Bewegung des Trägerelements 19 nach rechts erzwingt. Diese Horizontalbewegungen realisieren den Kupplungsweg und den Spannweg.

Da der Hydraulikzylinder 23 fest auf dem Trägerelement 19 aufsitzt, also gewissermaßen am Trägerelement 19 widergelagert ist, wird beim Antriebshub des Hydraulikzylinders 23 nach Maßgabe des Spiels in der Wegbegrenzungsausnehmung 20b auch die Horizontalbewegung des Trägerelements 19 erzwungen. Zur Schonung der unteren elektrischen Kupplungsteile 28a, 28b der bewegbaren Kupplung F ist das maschinenseitige Kupplungsteil 28b rückseitig mittels Schraubenfedern gepuffert.

Bei einer solchen Ausbildung der Kupplungseinrichtung ist die aus der maschinenseitigen Kupplungshälfte 27; 28b und deren Träger (Schlitten 22) sowie dem zugehörigen hydraulischen Antriebszylinder 23 und dessen Träger (Trägerelement 19) bestehende und mittels der Anschlußplatte 18 am bewegbaren Formträger 13' begrenzt verschieblich abgestützte bauliche Einheit nach Vollzug der Kupplung mit der Anlageplatte 11 der Spritzgießform fest verspannt. Dabei greift die Nase 19a des Trägerelementes 19 auf der einen Seite der Anlageplatte 11 und das Trägerteil 22a für die Kupplungshälfte 27;28b des Schlittens 22 auf der anderen Seite der Anlageplatte 11 an. Die genannte Spann- und Kupplungsoperation setzt also voraus, daß der Antriebshub des hydraulischen Antriebszylinders 23 in eine entgegengesetzte Bewegung von Trägerelement 19 und Schlitten 22 umgesetzt wird. Je nach Ausgangslage kann dabei die Spannbewegung des Trägerelementes 19 relativ gering und die Spannbewegung des Schlittens 20 entsprechend groß - oder umgekehrt sein. Die genannten Spannbewegungen können je nach auftretenden Friktionen gleichzeitig oder nacheinander erfolgen.

Fig. 9 verdeutlicht die Versorgung eines einen metallenen Kern 31 steuernden Hydraulikzylinders 30 über die gießformseitige Kupplungshälfte 26 und Verbindungsleitungen 33 mit Druckmedium. Die Achse des Hydraulikzylinders 30 mit Kolbenstange 30a und eigentlichem Zylinder 30b liegt in der Trennebene t-t und verläuft horizontal. Der Kern 31 ist bereits aus dem fertigen Spritzteil 32 herausgezogen.

In den Fign. 1 und 2 sind mit 15e die maschinenseitigen Anschlüsse der Versorgungsleitungen an der Kupplung T und mit 14a die gießformseitigen Anschlüsse der Versorgungsleitungen an die gießformseitige Kupplungshälfte 14 bezeichnet. Beim Kupplungshub ist die maschinenseitige Kupplungshälfte 15 an den Führungsbolzen 34 vertikal geführt. Diese sind oben mittels Hintergriffsorganen 34a an einer. Brücke des Wechseltisches und mit unteren Hintergriffsorganen 34b an der gießformseitigen Kupplungshälfte 14 abstützbar, wo sie in eine Führungsnut 16 der Kupplungshälfte 14 eingreifen. Die Umlenkung des Kraftvektors des Antriebshubes des Antriebszylinders 15a für die stationäre Kupplung T wird durch analoge technische Mittel bewirkt wie beim Antriebszylinder 23 für die bewegbare Kupplung F.

## Patentansprüche

1. Kupplungseinrichtung an der mit Anlageplatten (11) versehenen Spritzgießform (S) einer Kunststoff-Spritzgießmaschine, die sowohl für die Zufuhr von Temperiermedien, als auch für den Vollzug von operativen Gießformfunktionen, wie beispielsweise dem hydraulischen Ziehen von Kernen, dem Druckluftausstoß von Spritzteilen, der Abgabe von Signalen und dergleichen bestimmt und geeignet ist,
mit einer an der bewegbaren Gießformhälfte (Sb) befestigten Kupplungshälfte (26,28a), die mit einer maschinenseitigen Kupplungshälfte (27, 28b) eine bewegbare Kupplung (F) für den Anschluß von Versorgungsleitungen bildet und mit einer an der stationären Gießformhälfte (Sa) befestigten Kupplungshälfte (14), die mit einer maschinenseitigen Kupplungshälfte (15) eine stationäre Kupplung (T) für den Anschluß von Versorgungsleitungen bildet,
und mit hydraulischen Antriebszylindern (23;15a), durch welche die genannten beiden Kupplungen (F; T) im Gefolge eines Antriebshubes nach dem Programm des Rechners der Kunststoff-Spritzgießmaschine kuppelbar sind, wobei die Anlageplatten (11) der Spritzgießform (S) den Gießformkörper überragen und die gießformseitigen Kupplungshälften (14; 26) je im Bereich der überragenden Abschnitte der Anlageplatten (11) befestigbar sind,
dadurch gekennzeichnet, daß die bewegbare Kupplung (F) für die An- bzw. Abkupplung von Versorgungsleitungen für den Vollzug von operativen Gießformfunktionen und die stationäre Kupplung (T) für die An- bzw. Abkupplung der Versorgungsleitungen für das Temperiermedium zwecks Temperierung beider Gießformhälften (Sa;Sb) ausgebildet sind, die Kupplungsrichtung der bewegbaren Kupplung (F) senkrecht zur Trennebene (t-t) der Spritzgießform (S) verläuft und der Antriebshub des Antriebszylinders (23) in einen Kupplungsweg für die Ankupplung der maschinenseitigen Kupplungshälfte (27) und einem Spannweg entgegengesetzter Richtung für die Verspannung des Trägerelements (19) des Antriebszylinders (23) mit der bewegbaren Gießformhälfte (Sb) umsetzbar ist.

2. Kupplungseinrichtung nach Anspruch 1, dadurch gekennzeichnet, daß die Kupplungsrichtung der stationären Kupplung (T) parallel zur Trennebene (t-t) der Spritzgießform (S) verläuft.

3. Kupplungseinrichtung nach Anspruch 1 oder 2, dadurch gekennzeichnet, daß die eine gießformseitige Kupplungshälfte (14) an der Oberkante der Anlageplatte (11) der stationären Gießformhälfte (Sa) und die andere gießformseitige Kupplungshälfte (26) an einer an der Anlageplatte (11) der bewegbaren Gießformhälfte (Sb) befestigten Anschlußplatte (18) befestigbar ist.

4. Kupplungseinrichtung nach einem der vorhergehenden Ansprüche, dadurch gekennzeichnet, daß die Richtung des Antriebshubes der hydraulischen Antriebszylinder (23;15a) je senkrecht zur Kupplungsrichtung der von den genannten Antriebszylindern (23;15a) angetriebenen Kupplungen (F; T) steht und der Kraftvektor des Antriebshubes mittels Steuerplatten (25) um 90° umlenkbar ist, die mit schrägen Steuernuten (25a) versehen sind.

5. Kupplungseinrichtung nach Anspruch 4, dadurch gekennzeichnet, daß zur Umlenkung des Kraftvektors des Antriebshubes des am bewegbaren Formträger (13') angeordneten Antriebszylinders (23) Steuerzapfen (22b) eines die zugehörige Kupplungshälfte (27) tragenden Schlittens (22) in die schrägen Steuernuten (25a) der Steuerplatten (25) dieses Antriebszylinders (23) eingreifen.

6. Kupplungseinrichtung nach Anspruch 5, dadurch gekennzeichnet, daß der Schlitten (22) an einem den Antriebszylinder (23) abstützenden Trägerelement (19) geführt ist, das mit der bewegbaren Gießformhälfte (Sb) mittels einer Hintergriffsnase (19a) verspannbar ist, die in Spannposition an einer Anschlußplatte (18) der Gießformhälfte (Sb) anliegt.

7. Kupplungseinrichtung nach Anspruch 6, dadurch gekennzeichnet, daß der Kupplungsweg mittels einer Wegbegrenzungsnut (20a) in einer am bewegbaren Formträger (13') befestigten Lagerplatte (20) begrenzt ist, in welcher der die Steuernut (25a) der benachbarten Steuerplatte (25) durchgreifende Steuerzapfen (22b) des Schlittens (22) eintaucht und daß der Spannweg mittels einer Wegbegrenzungsausnehmung (20b in Fig. 4) in der Lagerplatte (20) begrenzt ist, in welche Wegbegrenzungsausnehmung (20b) ein Wegbegrenzungselement (29) des Schlittens (22) mit einem dem Spannweg entsprechenden Spiel eintaucht.

8. Kupplungseinrichtung nach einem der vorhergehenden Ansprüche, dadurch gekennzeichnet, daß die maschinenseitige Kupplungshälfte (15) der stationären Kupplung (T) beim Antriebshub des zugehörigen Antriebszylinders (15a) an Führungsbolzen (34 in Fig. 1) geführt ist, die außerhalb der KunststoffSpritzgießmaschine an einem Wechseltisch abgestützt sind.

9. Kupplungseinrichtung nach einem der Ansprüche 5 bis 8, dadurch gekennzeichnet, daß der ein hydraulisches Kupplungsteil (27 in Fig. 3,6) und ein elektrisches Kupplungsteil (28b) tragende Schlitten (22) mit dem den Antriebszylinder (23) tragenden Trägerelement (19) eine bauliche Einheit bildet, die in einer mit dem bewegbaren Formträger (13) mittels Schraubenbolzen (21) verschraubten, vertikalen Lagerplatte (20) begrenzt horizontal verschiebbar gelagert ist.

## Claims

1. Coupling assembly on the injection mould (S), which is provided with back plates (11), of a plastics material injection moulding machine, which is intended and suitable both for the supply of temperature control media and for the execution of operative mould functions, such as, for example, the hydraulic pulling of cores, the ejection of compressed air from mouldings, the transmission of signals, and the like,
including a coupling half (26, 28a), which is secured to the movable mould half (Sb) and forms with a machine-side coupling half (27, 28b) a movable coupling (F) for the connection of supply lines, and including a coupling half (14), which is secured to the stationary mould half (Sa) and forms with a machine-side coupling half (15) a stationary coupling (T) for the connection of supply lines,
and including hydraulic actuating cylinders (23; 15a), by means of which the two above-mentioned couplings (F; T) are couplable as a consequence of an actuating stroke according to the program of the computer of the plastics material injection moulding machine, the back plates (11) of the injection mould (S) protruding from the mould body, and each of the mould-side coupling halves (14; 26) being securable in the region of the protruding portions of the back plates (11),
characterised in that the movable coupling (F) is provided for the coupling and uncoupling of supply lines for the execution of operative mould functions, and the stationary coupling (T) is provided for the coupling and uncoupling of the supply lines for the temperature control medium for the temperature control of both mould halves (Sa; Sb); the coupling direction of the movable coupling (F) extends at right angles to the parting plane (t-t) of the injection mould (S); and the actuating stroke of the actuating cylinder (23) is convertible into a coupling movement for the coupling of the machine-side coupling half (27) and into a clamping movement in the opposite direction for the clamping of the carrier (19) of the actuating cylinder (23) to the movable mould half (Sb).

2. Coupling assembly according to claim 1, characterised in that the coupling direction of the stationary coupling (T) extends parallel to the parting plane (t-t) of the injection mould (S).

3. Coupling assembly according to claim 1 or 2, characterised in that one mould-side coupling half (14) is securable to the top edge of the back plate (11) of the stationary mould half (Sa), and the other mould-side coupling half (26) is securable to a mounting plate (18) fastened to the back plate (11) of the movable mould half (Sb).

4. Coupling assembly according to one of the preceding claims, characterised in that the direction of each actuating stroke of the hydraulic actuating cylinder (23; 15a) extends at right angles to the coupling direction of the couplings (F; T), which are actuated by said actuating cylinders (23; 15a), and the force vector of the actuating stroke is deflectable through 90° by means of cam plates (25), which are provided with oblique cam slots (25a).

5. Coupling assembly according to claim 4, characterised in that, in order to deflect the force vector of the actuating stroke of the actuating cylinder (23), which is disposed on the movable mould carrier (13'), cam follower pins (22b) of a carriage (22) carrying the associated coupling half (27) engage in the oblique cam slots (25a) in the cam plates (25) of this actuating cylinder (23).

6. Coupling assembly according to claim 5, characterised in that the carriage (22) is guided on a carrier (19), which supports the actuating cylinder (23) and is clampable to the movable mould half (Sb) by means of a locking nose (19a), which abuts against a mounting plate (18) of the mould half (Sb) in the clamping position.

7. Coupling assembly according to claim 6, characterised in that the coupling movement is limited by means of a limiting groove (20a) in a bearing plate (20), which is secured to the movable mould carrier (13') and in which the cam follower pin (22b) of the carriage (22) extends, said pin traversing the cam slot (25a) in the adjacent cam plate (25), and in that the clamping movement is limited by means of a limiting recess (20b in Fig. 4) in the bearing plate (20), a limiting means (29) of the carriage (22) extnding into said limiting recess (20b) with a clearance corresponding to the clamping movement.

8. Coupling assembly according to one of the preceding claims, characterised in that, during the actuating stroke of the associated actuating cylinder (15a), the machine-side coupling half (15) of the stationary coupling (T) is guided on guide pins (34 in Fig. 1), which are supported on a changing table externally of the plastics material injection moulding machine.

9. Coupling assembly according to one of claims 5 to 8, characterised in that the carriage (22), which carries an hydraulic coupling part (27 in Figs. 3 and 6) and an electrical coupling part (28b), forms with the carrier (19) carrying the actuating cylinder (23) a structural unit which is mounted in a vertical bearing plate (20), screw-connected to the movable mould carrier (13) by means of screws (21), so as to be horizontally displaceable to a limited extent.

## Revendications

1. Dispositif d'accouplement sur le moule (S), pourvu de plateaux d'application (11), d'une presse d'injection de matière plastique, dispositif qui est conçu et approprié tant pour l'alimentation de fluides d'équilibrage de température que pour l'accomplissement de fonctions d'exploitation du moule, comme par exemple le tirage hydraulique de noyaux, l'éjection par air comprimé de pièces moulées, la délivrance de signaux et similaires,
avec un demi-accouplement (26, 28a) qui est fixé sur le demi-moule mobile (Sb) et forme avec un demi-accouplement (27, 28b) prévu sur la presse un accouplement mobile (F) pour le raccordement de conduites d'alimentation, et avec un demi-accouplement (14) qui est fixé sur le demi-moule stationnaire (Sa) et forme avec un demi-accouplement (15) prévu sur la presse un accouplement stationnaire (T) pour le raccordement de conduites d'alimentation,
et avec des vérins hydrauliques d'entraînement (23; 15a) qui permettent de coupler les deux accouplements précités (F; T) au cours d'une course d'entraînement en fonction du programme du calculateur de commande de la presse d'injection, les plateaux d'application (11) du moule (S) dépassant du corps du moule et les demi-accouplements (14; 26) prévus sur le moule pouvant être respectivement fixés dans la région des parties dépassantes des plateaux d'application (11),
**caractérisé** en ce que l'accouplement mobile (F) est conçu pour accoupler ou désaccoupler des conduites d'alimentation pour l'accomplissement de fonctions d'exploitation du moule et l'accouplement stationnaire (T) est conçu pour accoupler ou désaccoupler des conduites d'alimentation pour le fluide d'équilibrage de température destiné à l'équilibrage de la température des deux demi-moules (Sa; Sb), la direction d'accouplement de l'accouplement mobile (F) s'étend perpendiculairement au plan de séparation (t-t) du moule (S), et la course d'entraînement du vérin d'entraînement (23) peut être transformée en une course d'accouplement pour l'accouplement du demi-accouplement (27) prévu sur la presse, et une course de serrage, de direction opposée, pour l'assemblage par serrage de l'élément porteur (19) du vérin d'entraînement (23) avec le demi-moule mobile (Sb).

2. Dispositif d'accouplement selon la revendication 1, **caractérisé** en ce que la direction d'accouplement de l'accouplement stationnaire (T) s'étend parallèlement au plan de séparation (t-t) du moule (S).

3. Dispositif d'accouplement selon la revendication 1 ou 2, **caractérisé** en ce que l'un (14) des demi-accouplements prévus sur le moule peut être fixé sur le bord supérieur du plateau d'application (11) du demi-moule stationnaire (Sa), et l'autre demi-accouplement (26) prévu sur le moule peut être fixé sur une plaque de raccordement (18) fixée sur le plateau d'application (11) du demi-moule mobile (Sb).

4. Dispositif d'accouplement selon l'une des revendications précédentes, **caractérisé** en ce que la direction de la course d'entraînement des vérins hydrauliques d'entraînement (23; 15a) est respectivement perpendiculaire à la direction d'accouplement des accouplements (F; T) entraînés par ces vérins d'entraînement (23; 15a), et on peut faire changer de 90° la direction du vecteur de force de la course d'entraînement au moyen de plaques de commande (25), qui sont pourvues de rainures de commande obliques (25a).

5. Dispositif d'accouplement selon la revendication 4, **caractérisé** en ce que, pour faire changer la direction du vecteur de force de la course d'entraînement du vérin d'entraînement (23) disposé sur le porte-moule mobile (13'), des tenons de commande (22b) d'un coulisseau (22) portant le demi-accouplement associé (27) s'engagent dans les rainures de commande obliques (25a) des plaques de commande (25) de ce vérin d'entraînement (23).

6. Dispositif d'accouplement selon la revendication 5, **caractérisé** en ce que le coulisseau (22) est guidé sur un élément porteur (19) soutenant le vérin d'entraînement (23), élément qui peut être assemblé par serrage au demi-moule mobile (Sb) au moyen d'un ergot de prise arrière (19a) qui, en position de serrage, s'applique contre une plaque de raccordement (18) du demi-moule (Sb).

7. Dispositif d'accouplement selon la revendication 6, **caractérisé** en ce que la course d'accouplement est limitée par une rainure (20a) pratiquée dans une plaque de montage (20) fixée sur le porte-moule mobile (13'), rainure dans laquelle s'enfonce le tenon de commande (22b) du coulisseau (22), lequel tenon traverse la rainure de commande (25a) de la plaque de commande voisine (25), et en ce que la course de serrage est limitée par un évidement limiteur de course (20b sur la figure 4) pratiqué dans la plaque de montage (20), évidement dans lequel un élément limiteur de course (29) du coulisseau (22) s'enfonce avec un jeu correspondant à la course de serrage.

8. Dispositif d'accouplement selon l'une des revendications précédentes, **caractérisé** en ce que le demi-accouplement (15) de l'accouplement stationnaire (T) prévu sur la presse est, lors de la course d'entraînement du vérin d'entraînement associé (15a), guidé sur des broches de guidage (34 sur la figure 1) qui sont soutenues à l'extérieur de la presse d'injection sur une table de remplacement.

9. Dispositif d'accouplement selon l'une des revendications 5 à 8, **caractérisé** en ce que le coulisseau (22), portant une partie d'accouplement hydraulique (27 sur les figures 3, 6) et une partie d'accouplement électrique (28b), constitue avec l'élément porteur (19) portant le vérin d'entraînement (23) une unité de construction qui est montée à coulissement horizontal limité dans une plaque de montage verticale (20) boulonnée par des boulons (21) au porte-moule mobile (13).
